(19) Europäisches Patentamt
European Patent Office
Office européen des brevets

(11) EP 1 215 227 A2

(12) **EUROPÄISCHE PATENTANMELDUNG**

(43) Veröffentlichungstag: **19.06.2002 Patentblatt 2002/25**

(21) Anmeldenummer: **01128436.1**

(22) Anmeldetag: **05.12.2001**

(51) Int Cl.⁷: **C08J 7/04**, C09D 167/00, C09D 133/06 // C08L67:02

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **16.12.2000 DE 10062981**

(71) Anmelder: **Mitsubishi Polyester Film GmbH
65203 Wiesbaden (DE)**

(72) Erfinder:
- **Peiffer, Herbert, Prof. Dr.
55126 Mainz (DE)**
- **Bartsch, Stefan, Dr.
65199 Wiesbaden (DE)**
- **David, Richard Lee
65187 Wiesbaden (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(54) **Heisssterilisierbare, biaxial orientierte Polyesterfolie mit guter Metallhaftung, Verfahren zu ihrer Herstellung und ihre Verwendung**

(57) Die Erfindung betrifft eine heißsterilisierbare, biaxial orientierte Polyesterfolie mit einer Basisschicht B, die mindestens 80 Gew.-% thermoplastischen Polyester enthält, und mindestens einer Haftvermittlerschicht, die eine Mischung aus zwei Komponenten I und II enthält. Die Komponente I der Mischung bzw. des Blends besteht aus einem Copolymeren, das ein Kondensationsprodukt der folgenden Monomeren bzw. deren zur Bildung von Polyestern befähigten Derivaten enthält: Isophthalsäure, aliphatische Dicarbonsäure, Sulfomonomeren und aliphatische oder cycloaliphatische Glykole. Die Komponente II der Mischung bzw. des Blends ist ein acrylisch und/oder methacrylisch vernetztes Copolymer. Die erfindungsgemäße Folie ist für die Verwendung als Verpackungsfolie, speziell zur Verpakkung von Lebens- und Genussmitteln, zum Laminieren, Metallisieren und Bedrucken oder für Anwendungen im industriellen Sektor gut geeignet. Die Erfindung betrifft auch ein Verfahren zur Herstellung der Folie.

EP 1 215 227 A2

## Beschreibung

Die Erfindung betrifft eine heißsterilisierbare, biaxial orientierte Polyesterfolie mit mindestens einer Basisschicht B, die mindestens 80 Gew.-% thermoplastischen Polyester enthält, und mindestens einer Haftvermittlerschicht, die eine Mischung aus zwei Komponenten I und II enthält. Die Erfindung betrifft weiterhin ein Verfahren zur Herstellung der Folie und ihre Verwendung.

In der EP-A-0144 978 wird eine selbsttragende orientierte Folie aus einem thermoplastischen Kunststoff beschrieben, die auf wenigstens einer ihrer beiden Oberflächen eine durchgehende Polyesterbeschichtung trägt, die als wässrige Dispersion auf die Folie vor dem letzten Streckschritt aufgebracht wird. Die Polyesterbeschichtung besteht aus einem Kondensationsprodukt von verschiedenen zur Bildung von Polyestern befähigten Derivaten, wie Isophthalsäure, aliphatische Dicarbonsäure, Sulfomonomere und aliphatisches oder cycloaliphatisches Glykol. Die Folie weist eine gute Haftung zu Metallen auf, ist jedoch wegen mangelnder Wasserdampfbeständigkeit nicht sterilisierbar.

In der EP-A-0 144 948 wird eine selbsttragende orientierte Folie aus einem thermoplastischen Kunststoff beschrieben, die auf wenigstens einer ihrer beiden Oberflächen eine durchgehende vernetzte acrylathaltige Beschichtung trägt, die auch als wässrige Dispersion auf die Folie vor dem letzten Streckschritt aufgebracht wird. Die acrylathaltige Beschichtung besteht aus Copolymeren mit mindestens 50 Gew.-% acrylischen und/oder methacrylischen Monomeren, 1-15 Gew.-% Monomeren, enthaltend eine funktionelle Gruppe, die befähigt ist, in copolymerisiertem Zustand unter Einwirkung von erhöhten Temperaturen intermolekulare Vernetzungen einzugehen, sowie einem oder mehreren einfach ethylenisch ungesättigten, halogenfreien Monomeren in einer Menge bis zu 49 Gew.-%, wobei die Prozentangaben jeweils auf das Gesamtgewicht des die Haftvermittlerschicht bildenden Copolymeren bezogen sind. Die Folie weist eine gute Sterilisierbarkeit, jedoch eine schlechte Metallhaftung auf.

Aufgabe der vorliegenden Erfindung war es, eine heißsterilisierbare, insbesondere eine dampfsterilisierbare, biaxial orientierte Polyesterfolie mit einer Haftvermittlerschicht, die eine gute Haftung zu Metallen aufweist, zur Verfügung zu stellen. Insbesondere war es Aufgabe der vorliegenden Erfindung, die Metallhaftung der Folie so einzustellen, dass die metallisierte Folie gleichzeitig unter Wasserdampfeinfluss sterilisiertwerden kann. Außerdem soll dafürSorge getragen werden, dass die Folie auch auf schnelllaufenden Verarbeitungsmaschinen verarbeitet werden kann. Bei der Herstellung der Folie soll weiterhin gewährleistet sein, dass Verschnittmaterial, das während der Folienherstellung im Betrieb anfällt, als Regenerat in einer Menge von bis zu 60 Gew.-%, bezogen auf das Gesamtgewicht der Folie, wieder der Extrusion zugeführt werden kann, ohne dass dabei die physikalischen Eigenschaften der so hergestellten Folie nennenswert negativ beeinflusst werden.

Gelöst wird die Aufgabe durch eine heißsterilisierbare, biaxial orientierte Polyesterfolie der eingangs genannten Gattung, deren kennzeichnende Merkmale darin bestehen, dass die Haftvermittlerschicht eine Mischung bzw. einen Blend aus zwei Komponenten I und II enthält, wobei die Komponente I ein Copolyester und die Komponente II acrylisch und/oder methacrylisch vernetzte Copolymere enthält, die weiter unten näher beschrieben sind.

Überraschenderweise hat sich gezeigt, dass durch die Verwendung einer Mischung, bzw. eines Blends der Komponenten I und II die gewünschte Kombination der guten Metallhaftung und der Sterilisierbarkeit erzielt werden konnte. Das Gewichtsverhältnis der eingesetzten Komponenten zueinander beträgt I:II = 5:95 bis I:II = 95:5, vorzugsweise I:II = 10:90 bis I:II = 90:10 und insbesondere I:II =15:85 bis I:II =85:15.

Unter Mischungen im Sinne der vorliegenden Erfindung sind mechanische Mischungen zu verstehen, welche aus den Einzelkomponenten hergestellt werden. Im Allgemeinen werden hierzu die einzelnen Bestandteile als gepresste Formkörper kleiner Größe, z.B. linsen- oder kugelförmiges Granulat, zunächst zusammengeschüttet, danach mit einer geeigneten Rüttelvorrichtung mechanisch miteinander gemischt und dann in Wasser gelöst. Eine andere Möglichkeit für die Erstellung der Mischung besteht darin, dass zunächst die jeweiligen Komponenten I und II in Granulatform jeweils für sich getrennt in wässriger Lösung gelöst werden und dann die wässrigen Lösungen vor dem Aufbringen auf die Folie gemischt werden.

Ein Blend im Sinne dervorliegenden Erfindung ist ein legierungsartiger Verbund der einzelnen Komponenten I und II, der nicht mehr in die ursprünglichen Bestandteilen zerlegt werden kann. Ein Blend weist Eigenschaften wie ein homogener Stoff auf und kann entsprechend durch geeignete Parameter charakterisiert werden.

Erfindungsgemäß umfasst die Folie zumindest eine Basisschicht B. In einer bevorzugten Ausführungsform der Erfindung ist die Folie dreischichtig aufgebaut und weist neben der Basisschicht B zusätzlich die Deckschichten A und C auf. Daneben können zwischen der Basisschicht B und den Deckschichten A und C außerdem noch weitere Zwischenschichten vorhanden sein.

Die Basisschicht B der Folie enthält bevorzugt mindestens 90 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bishydroxymethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Deckschicht A (oder der Deckschicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Zwischenschichten und für die Deckschichten A und C können prinzipiell die gleichen Polymeren verwendet werden, wie für die Basisschicht B. Daneben können in den Deckschichten A und C auch andere Materialien enthalten sein, wobei dann die Deckschichten A und C bevorzugt aus Polyestern bestehen, welche Ethylen-2,6-naphthalat-Einheiten und Ethylen-terephthalat-Einheiten enthalten. Bis zu 30 Mol-% der Polymere können aus weiteren Comonomeren bestehen. In einer vorteilhaften Ausgestaltung der Erfindung kann die beschichtete Deckschicht ein Gemisch von Polymeren, ein Copolymeres oder ein Homopolymer aus Ethylen-isophthalat-Einheiten enthalten. Überraschend wird dabei die Metallhaftung sehr hoch.

Zwischen der Basisschicht B und den Deckschicht(en) A und C kann sich gegebenenfalls noch eine zusätzliche Zwischenschicht befinden. Sie kann aus den für die Basisschicht B beschriebenen Polymeren bestehen. In einer besonders bevorzugten Ausführungsform besteht sie aus dem für die Basisschicht B verwendeten Polyester. Sie kann auch die beschriebenen üblichen Additive enthalten. Die Dicke der Zwischenschicht ist im Allgemeinen größer als 0,3 μm und liegt vorzugsweise im Bereich von 0,5 bis 15 μm, insbesondere 1,0 bis 10 μm.

Die Dicke der Deckschicht(en) A und C ist im Allgemeinen größer als 0,1 μm und liegt vorzugsweise im Bereich von 0,2 bis 5 μm, insbesondere von 0,2 bis 4 μm, wobei die Deckschichten A und C gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie liegt vorzugsweise im Bereich von 4 bis 300 μm, insbesondere von 5 bis 250 μm, vorzugsweise von 6 bis 200 μm, wobei die Basisschicht B einen Anteil von vorzugsweise etwa 40 bis 95 % an der Gesamtdicke hat.

Die Basisschicht B und die anderen Schichten können zusätzlich übliche Additive, wie Stabilisatoren, Antiblockmittel und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikeln, beispielsweise Calciumcarbonat, amorphe Kieselsäure, pyrogene Kieselsäure, sphärische Siliziumdioxidpartikel, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikeln.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikeln können den Polymeren der einzelnen Schichten der Folie in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 25 Gew.-% erwiesen (bezogen auf das Gewicht der jeweiligen Schicht). Eine detaillierte Beschreibung der Antiblockmittel findet sich beispielsweise in der EP-A-0 602 964.

Erfindungsgemäß ist mindestens eine Seite der Folie mit einer Haftvermittlerschicht beschichtet. Die Beschichtung auf der fertigen Folie weist eine Dicke im Bereich von 5 bis 2000 nm, bevorzugt von 10 bis 500 nm, insbesondere von 20 bis 200 nm auf. Die Beschichtung wird bevorzugt In-line aufgebracht, das bedeutet während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtungen äußerst homogen in Schichtdicken bis 100 nm auftragen lassen. Ebenfalls bevorzugt ist die Aufbringung durch das Meyer-Rod-Verfahren, mit dem sich größere Beschichtungsstärken erzielen lassen. Die genannten Beschichtungen verleihen der Folienoberfläche die gewünschten Funktionen und mögliche weitere Funktionen, beispielsweise kann die Folie dadurch siegelfähig, bedruckbar, antistatisch oder mit verbesserter Aromabarriere ausgerüstet sein oder die Haftung zu Materialien ermöglichen, die ansonsten nicht auf der Folienoberfläche haften würden (z.B. photographische Emulsionen).

Die genannten Stoffe/Zusammensetzungen werden zunächst als verdünnte Lösung, Suspension oder Dispersion, vorzugsweise als wässrige Lösung, wässrige Suspension oder wässrige Dispersion, auf eine oder beide Folienoberflächen aufgebracht, anschließend wird dann das Lösungsmittel verflüchtigt. Werden die Beschichtungen In-line, nach dem Längsstrecken und vor dem Querstrekken aufgebracht, reicht gewöhnlich die Temperaturbehandlung bei dem Querstrecken und der anschließenden Hitzefixierung aus, um das Lösungsmittel vollständig zu verflüchtigen und die Beschichtung zu trocknen.

Für die Komponente I der Mischung, bzw. des Blends der Haftvermittlerbeschichtung werden Copolyester eingesetzt, hergestellt durch Polykondensation von (α) Isophthalsäure, (β) einer aliphatischen Dicarbonsäure mit der Formel $HOOC(CH_2)_nCOOH$, bei der n im Bereich von 1 bis 11 liegt, (γ) einem Sulfomonomeren enthaltend eine Alkalimetallsulfonatgruppe an dem aromatischen Teil einer aromatischen Dicarbonsäure und (δ) wenigstens einem aliphatischen oder cycloaliphatischen Alkylenglykol mit 2 bis 11 Kohlenstoffatomen. Die insgesamt anwesenden Säureäquivalente sollen auf molarer Basis im Wesentlichen den insgesamt anwesenden Glykoläquivalenten entsprechen.

Beispiele für Sulfomonomere, die eine Metallsulfonatgruppe an dem aromatischen Teil einer aromatischen Dicarbonsäure (Komponente γ) enthalten, sind solche Monomere, die der folgenden allgemeinen Formel entsprechen:

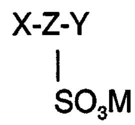

In dieser Formel ist

M ein einwertiges Kation eines Alkalimetalls,
Z ein dreiwertiger aromatischer Rest, und
X und Y sind Carboxylgruppen oder Polyester bildende Äquivalente.

Monomere dieser Art sind in den US-PSen 3,563,942 und 3,779,993 beschrieben. Beispiele solcher Monomeren sind Natrium-sulfoterephthalsäure, Natrium-5-sulfoisophthalsäure, Natrium-sulfophthalsäure, 5-(p-Natriumsulfphenoxy)-isophthalsäure, 5-(Natrium-sulfopropoxy)-isophthalsäure und dergleichen Monomere sowie deren zur Bildung von Polyestern befähigte Derivate, wie z.B. die Dimethylester. M ist vorzugsweise $Na^+$, $Li^+$ oder $K^+$.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu solchen Gruppen zählen Carboxylgruppen sowie deren niedere Alkylester, z.B. Dimethylterephthalat, Diethylterephthalat und zahlreiche andere Ester, Halogenide oder Salze. Bevorzugt werden die Säure-Monomeren als Dimethylester verwendet, da auf diese Weise die Kondensationreaktion besser gesteuert werden kann.

Es hat sich gezeigt, dass die verhältnismäßigen Anteile der Komponenten α, β, γ und δ, die zur Herstellung der bevorzugten Copolyesterbeschichtungen eingesetzt werden, entscheidend für das Erzielen einer beschichteten Folie mit zufrieden stellender Haftung sind. So muss z.B. Isophthalsäure (Komponente α) zu mindestens etwa 65 Mol-% als Säurekomponente anwesend sein, bezogen auf die Komponente I. Bevorzugt ist die Komponente α als reine Isophthalsäure, die in einer Menge von etwa 70 bis 95 Mol-% anwesend ist. Für die Komponente β gilt, dass jede Säure mit der genannten Formel zufrieden stellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten des Copolyesters, wenn die Komponente β in der Zusammensetzung enthalten ist. Das die Komponente γ der bevorzugten Copolyesterbeschichtung bildende Monomere soll in einer Menge von wenigstens 5 Mol-% in diesem System enthalten sein, damit die Grundierung mit Wasser dispergierbar wird. Bevorzugt liegt die Menge an Monomerem der

Komponente γ bei etwa 6,5 bis 12 Mol-%. Die Glykolkomponente (δ) ist in ungefähr stöchiometrischer Menge anwesend.

Für die Komponente II der Mischung, bzw. des Blends der Haftvermittlerbeschichtung werden Acrylcopolymere eingesetzt. Die bevorzugt verwendeten Copolymeren bestehen im Wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Die acrylische Komponente der Haftvermittlercopolymere ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C-Atome enthält, wie z.B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat ($C_1$ bis $C_4$) abgeleitet sind, insbesondere Ethylacrylat, ergeben zusammen mit einem niederen Alkylmethacrylat eine besonders gute Haftung zwischen der Polyesterfolie und darauf aufgebrachten reprografischen Beschichtungen und Mattbeschichtungen. Ganz besonders bevorzugt werden Haftvermittlercopolymere aus einem Alkylacrylat, z.B. Ethylacrylat oder Butylacrylat, zusammen mit einem Alkylmethacrylat, z.B. Methylmethacrylat, insbesondere zu gleichen molaren Anteilen und in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat-Comonomere vorzugsweise in einem Anteil, der im Allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

Zur Erhöhung der Lösungsmittelbeständigkeit können gegebenenfalls zur Ausbildung von Vernetzungen geeignete Comonomere eingesetzt werden, wie z.B. N-Methylolacrylamid, N-Methylolmethacrylamid und die entsprechenden Ether; Epoxidmaterialien wie z.B. Glycidylacrylat, Glycidylmethacrylat und Allylglycidylether; Carboxylgruppen enthaltende Monomere wie z.B. Crotonsäure, Itaconsäure oder Acrylsäure; Anhydride wie z.B. Maleinsäureanhydrid; Hydroxylgruppen enthaltende Monomere wie z.B. Itaconsäureanhydrid; Hydroxylgruppen enthaltende Monomere wie z.B. Allylalkohol und Hydroxyethyloder Hydroxypropylacrylat oder — methacrylat; Amide wie z.B. Acrylamid, Methacrylamid oder Maleinsäureamid und Isocyanate wie z.B. Vinylisocyanat oder Allylisocyanat. Von den oben genannten vernetzenden Comonomeren werden N-Methylolacrylamid und N-Methylolmethacrylamid bevorzugt, und zwar in erster Linie deswegen, weil Copolymerenketten, die eines dieser Monomerer enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z.B. eines Melamin- oder Harnstoff-Formaldehyd-Kondensationsproduktes erzielt werden. Wird keine Lösungsmittelbeständigkeit benötigt, so kann auf Venetzungsmittel verzichtet werden.

Die Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann ferner bekannte Zusätze enthalten wie z.B. Antistatika, Netzmittel, Tenside, pH-Regulatoren, Antioxidantien, Farbstoffe, Pigmente, Anti-Blockmittel wie z.B. kolloidales $SiO_2$ usw. Normalerweise ist es angebracht, ein Tensid einzuarbeiten, um die Fähigkeit der wässrigen Beschichtung zur Benetzung der Trägerfolie aus Polyester zu erhöhen.

Überraschend hat sich herausgestellt, dass durch die — im Prinzip einfache — Maßnahme des Mischens von für sich allein bereits bekannten Beschichtungen (Komponenten I und II) eine geeignete Lösung der gestellten Aufgabe gefunden wurde. Der Fachmann hätte zunächst erwartet, dass auf Grund der vorliegenden Komponente I, die für sich alleine nicht wasserdampfbeständig ist, die Folie nicht dampfsterilisierbar ist. Mit der vorliegenden Erfindung konnte dieses Vorurteil überraschend widerlegt werden.

Die Erfindung betrifft auch ein Verfahren zum Herstellen der erfindungsgemäßen Folie durch Koextrusion und nachfolgende biaxiale Orientierung und Hitzefixierung. Im Rahmen dieses Verfahrens wird zunächst das Polymere bzw. die Polymermischungen für die einzelnen Schichten, die Basisschicht B und die Deckschichten A und C, in Extrudern komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren innengekühlten Abzugswalzen abgezogen, wobei die Schmelze abkühlt und sich zu einer Vorfolie verfestigt.

Die biaxiale Streckung wird im allgemeinen sequentiell durchgeführt. Dabei wird die Vorfolie vorzugsweise zuerst in Längsrichtung (d.h. in Maschinenrichtung, = MD-Richtung) und anschließend in Querrichtung (d.h. senkrecht zur Maschinenrichtung, = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden

Seiten gezogen wird.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung im Bereich von 90 bis 150 °C durchgeführt.

Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Nach dem Längsstrecken und vor der Querstreckung werden eine oder beide Oberfläche(n) der Folie wie vorstehend in-line beschichtet.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Ein besonderer Vorteil der Erfindung besteht darin, dass die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass Verschnittmaterial, das während der Folienherstellung im Betrieb anfällt, als Regenerat in einem Anteil von bis zu 60 Gew.-%, bevorzugt 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die Folie eignet sich hervorragend zur Verpackung von feuchtigkeits- und/oder luftempfindlichen Nahrungs- und Genussmitteln. Speziell geeignet ist sie zur Herstellung so genannter "bag-in-box"-Verpackungen für die Verpakkung flüssiger oder gießbarer Produkte.

Die nachstehende Tabelle (Tabelle 1) fasst die wichtigsten erfindungsgemäßen Folieneigenschaften noch einmal auf einen Blick zusammen.

Tabelle 1

| | erfindungsgemäßer Bereich | bevorzugt | besonders bevorzugt | Einheit |
|---|---|---|---|---|
| Foliendicke | 3-300 | 4-250 | 5-200 | [µm] |
| Anteil Komponente I zu Komponente II | 5:95 - 95:5 | 10:90 - 90:10 | 15:85 - 85:15 | [Gew.-%] |
| Metallhaftung vor Sterilisierung | > 2,5 | > 3,0 | > 3,5 | [N/25 mm] |
| Metailhaftung nach Sterilisierung | > 2,0 | > 2,5 | > 3,0 | [N/25 mm] |

Zur Charakterisierung der Rohstoffe und der Folien wurden die folgenden Methoden benutzt:

**Solution Viscosity (SV-Wert)**

Die Standardviskosität SV (DCE) wird, angelehnt an DIN 53726, in Dichloressigsäure gemessen.
Die intrinsische Viskosität (IV) berechnet sich wie folgt aus der Standardviskosität

$$IV\ (DCE) = 6{,}907 \cdot 10^{-4}\ SV\ (DCE) + 0{,}063096$$

**Metallhaftung**

Das Folienmuster (300 mm längs x 180 mm quer) gemäß der vorliegenden Erfindung wird vor dem Verkleben auf einen glatten Karton (200 mm längs x 180 mm quer; ca. 400 g/m$^2$, gebleicht, Außenlagen gestrichen) gelegt, die überstehenden Folienenden sind auf die Rückseite umzuschlagen und mit Klebeband zu fixieren.

Die Verklebung der Folie gemäß der vorliegenden Erfindung mit einer Standardpolyesterfolie von 12 µm Dicke (z.B. Melinex 800) erfolgt mit einem Rakelgerät und Rakelstab Nr. 3 der Fa. Erichsen, wobei ca. 1,5 ml Klebstoff (Novacote NC 275+CA 12; Mischverhältnis: 4/1+ 7 Teile Ethylacetat) auf die Deckschicht A der Folie gemäß der vorliegenden Erfindung aufgetragen wird. Nach dem Auslüften des Lösemittels wird die Standardpolyesterfolie mit einer Metallrolle (Breite 200 mm, Durchmesser 90 mm, Masse 10 kg, nach DIN EN 20 535) auf die Deckschicht A der Folie gemäß der vorliegenden Erfindung aufkaschiert. Die Parameter der Kaschierung sind:

| | |
|---|---|
| Klebstoffmenge | 5+/- 1 g/m$^2$ |

(fortgesetzt)

| | |
|---|---|
| Lüften nach Auftrag des Klebers | 4 min +/- 15 s |
| Rakelstärke (Erichsen) | 3 |
| Geschwindigkeitsstufe des Rakels | ca. 133 mm/s |
| Aushärtzeit des Verbundes | 2 h bei 70 °C in einem Umluftofen |

Mit einem 25+/- 1 mm Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigem Klebeband mit der Rückseite der Folie gemäß der vorliegenden Erfindung (Basisschicht B oder Deckschicht C) vollflächig auf einem Trägerblech zu fixieren. Die Platte mit dem aufgeklebten Verbund ist in die untere Spannbacke der Zugprüfmaschine einzuspannen. Der Klemmabstand beträgt 100 mm. Das nicht kaschierte Ende der Standard-Polyesterfolie ist so in die obere Spannbacke der Zugprüfmaschine (z.B. Instron, Zwick) einzuspannen, dass sich ein Schälwinkel von 180 ° ergibt. Angegeben wird die mittlere Schälkraft in N/25 mm gerundet auf eine Nachkommastelle.

| | |
|---|---|
| Probenbreite | 25 mm |
| Vorkraft | 0,1 N |
| Messlänge | 25 mm |
| Abzugsgeschwindigkeit bis Vorkraft | 25 mm/min |
| Vorweg | 5 mm |
| Prüfweg | 40 mm |
| Empfindlichkeit | 0,01 N |
| Abzugsgeschwindigkeit | 100 mm/min |

Das Messergebnis für die Schälkraft ist gleichzusetzen mit der minimalen Haftkraft zwischen den Schichten, da die Haftkraft zwischen dem Kleber und der Standardfolie deutlich größer ist.

**Sterilisierbarkeit**

Zur Bestimmung der Sterilisierbarkeit wird die Folie für eine Dauer von 10 s einem Wasserdampfstrahl mit einer Temperatur von ca. 100 °C ausgesetzt. Anschließend wird die Metallhaftung, wie oben beschrieben, bestimmt.
Die folgenden Beispiele illustrieren die Erfindung.

**Beispiel 1**

Die Haftvermittlerschicht wurden wie folgt aus den Komponenten I und II hergestellt:
Die **Komponente I** für die erfindungsgemäße Beschichtungsmischung: Ein Copolyester mit ca. 90 Mol-% Isophthalsäure und 10 Mol-% des Natriumsalzes der 5-Sulfoisophthalsäure als Säurekomponente und 100 Mol-% Ethylenglykol als Glykolkomponente wurde nach dem folgenden Verfahren hergestellt:
Ein 2 l fassender Reaktionsbehälter aus Edelstahl, der mit einem Ankerrührer, einem Thermoelement zur Messung der Temperatur des Gefäßinhalts, einer 18 Zoll-Claisen/Vigreux-Destillationskolonne mit Kühler und Vorlage, einer Einlassöffnung und einem Heizmantel ausgerüstet war, wurde auf 190 °C vorgeheizt, mit Stickstoff gespült und mit 1065,6 g Dimethylisophthalat, 180,6 g Dimethyl-5-sulfoisophthalat-natriumsalz und 756,9 g Ethylenglykol befüllt. Außerdem wurden noch ein Puffer ($Na_2CO_3 \times 10\ H_2O$ - 0,439 g) und ein Umesterungskatalysator ($Mn(OAc)_2 \times 4\ H_2O$ - 0,563 g) in ein Gefäß gegeben. Das Gemisch wurde unter Rühren erhitzt, wobei Methanol abdestillierte. Während der Destillation wurde die Gefäßtemperatur allmählich auf 250 °C erhöht. Als das Gewicht des Destillates der theoreischen Methanolausbeute entsprach, wurde eine Ethylenglykollösung mit einem Gehalt von 0,188 g phosphoriger Säure zugesetzt. Die Destillationskolonne wurde durch einen gekrümmten Dampfabzug mit Vorlage ersetzt. Dem Reaktionsgemisch wurden 20 g reines Ethylencarbonat zugegeben, und sofort setzte eine heftige Gasentwicklung ($CO_2$) ein. Die $CO_2$-Entwicklung ließ nach etwa 10 min nach. Es wurde dann ein Unterdruck von 240 mm Hg gezogen und der Polykondensationskatalysator (0,563 g $Sb_2O_3$) in einer Ethylenglykolaufschlämmung) hinzugefügt. Das Reaktionsgemisch wurde unter Beibehaltung des Unterdruckes von 240 mm Hg 10 min gerührt, wonach der Druck in Stufen von jeweils 10 mm Hg/min von 240 mm Hg auf 20 mm Hg weiter reduziert wurde. Sobald das Vakuum im System auf 20 mm Hg reduziert war, wurde die Gefäßtemperatur mit einer Geschwindigkeit von 2 °C/min von 250 °C auf 290 °C angehoben. Bei einer Temperatur von 290 °C im Gefäß wurde die Rührergeschwindigkeit gedrosselt und der Druck

auf höchstens 0,1 mm Hg gesenkt. Zu diesem Zeitpunkt wurde ein Amperemeterablesung des Rührermotors vorgenommen. Die Viskosität des Polymeren wurde gesteuert, indem man die Polykondensation nach festen Werten für die Veränderung der Amperezahl des Rührermotors von (jeweils) 2,3 A ablaufen ließ. Als das gewünschte Molgewicht erreicht war, wurde das Gefäß mit Stickstoff unter Druck gesetzt, um das flüssige Polymere aus dem Bodenstopfen des Gefäßes in ein Abschreckbad aus Eiswasser zu pressen.

Aus dem hergestellten Copolyester wurde unter Rühren bei einer Temperatur von etwa 90 °C eine 4,5 Gew.-%ige wässrige Dispersion hergestellt, die nach vollständigem Dispergieren des Copolyesters auf Raumtemperatur abgekühlt und filtriert wurde. Anschließend wurde unter Rühren 0,85 Gew.-% einer 50 %-igen wässrigen Dispersion von kolloidalem $SiO_2$ zugegeben.

**Komponente II** für die erfindungsgemäße Beschichtungsmischung enthält eine 4,5 Gew.-%ige Lösung eines Latex, bestehend aus einem Copolymeren aus 60 Gew.-% Methylmethacrylat, 35 Gew.-% Ethylacrylat und 5 Gew.-% N-Methylolacrylamid und eines Tensids.

Die wässrigen Lösungen der Komponenten I und II wurden in gleichen Teilen zusammengegeben und gerührt.

Zugleich wurden Chips aus Polyethylenterephthalat bei 160 °C auf eine Restfeuchte von weniger als 50 ppm getrocknet und dem Extruder für die Basisschicht B zugeführt. Ebenfalls wurden Chips aus Polyethylenterephthalat und einem Füllstoff dem Extruder für die Deckschichten A und C zugeführt. Durch Koextrusion und anschließende stufenweise Orientierung in Längsrichtung wurde eine uniaxial orientierte Folie erhalten, die Corona behandelt und mittels des Reversgravurverfahrens mit der zuvor beschriebenen Dispersion beschichtetwurde, wobei das Trockengewicht der Beschichtung ca. 0,035 g/m$^2$ (bezogen auf die biaxial gestreckte Folie) betrug. Die so längsgestreckte Folie wurde in Querrichtung zu einer transparenten dreischichtigen Folie mit ABC-Aufbau und einer Gesamtdicke von 12 µm gestreckt. Die Deckschichten hatten eine Dicke von jeweils 1,5 µm.

Basisschicht B:

100 Gew.-% Polyethylenterephthalat (RT 49 der Firma KoSa) mit einem SV-Wert von 800

Deckschichten A und C:

90 Gew.-% Polyethylenterephthalat (RT 49 der Firma KoSa) mit einem SV-Wert von 800 und

10 Gew.-% Masterbatch aus 99 Gew.-% Polyethylenterephthalat und 1,0 Gew.-% Kieselsäurepartikel (® Sylobloc 44 H der Firma Grace) mit einer mittleren Teilchengröße von 4,5 µm.

Die einzelnen Verfahrensschritte waren:

| | | | |
|---|---|---|---|
| Extrusion | Temperaturen | Deckschicht | 300 °C |
| | | Basisschicht | 300 °C |
| | Temperatur der Abzugswalze | | 30 °C |
| | Düsenspaltweite | | 1 mm |
| | Temperatur der Abzugswalze | | 30 °C |
| Längsstreckung | Temperatur | | 85-135 °C |
| | Längsstreckverhältnis | | 4,0 : 1 |
| Querstreckung | Temperatur | | 85-135 °C |
| | Querstreckverhältnis | | 4,0 : 1 |
| Fixierung | Temperatur | | 230 °C |
| | Dauer | | 3 s |

Es wurde eine Folie mit einer guten Metallhaftung bei gleichzeitiger Sterilisierbarkeit erhalten, die Werte sind in Tabelle 2 angegeben.

**Beispiel 2**

Analog zu Beispiel 1 wurde durch Coextrusion eine dreischichtige Folie mit einer Gesamtdicke von 12 µm hergestellt. Es wurde nur die Zusammensetzung der wässrigen Lösung der Haftvermittlerschicht geändert:

Haftvermittlerschicht:

60 Gew.-% wässrige Lösung der Komponente I und
40 Gew.-% wässrige Lösung Komponente II.

**Beispiel 3**

Analog zu Beispiel 1 wurde durch Coextrusion eine dreischichtige Folie mit einer Gesamtdicke von 12 um hergestellt. Es wurde nur die Zusammensetzung der Haftvermittlerschicht geändert:

Haftvermittlerschicht:

40 Gew.-% wässrige Lösung der Komponente I und
60 Gew.-% wässrige Lösung der Komponente II.

**Vergleichsbeispiel 1**

Es wurde Beispiel 1 aus EP 0 144 978 nachgearbeitet. Die Monofolie hat eine Gesamtdicke von 75 µm und wurde mit 100 Gew.-% der Komponente I beschichtet. Die Folie zeigt zwar eine gute Metallhaftung, diese ist jedoch nicht dampfsterilisierbar.

**Vergleichsbeispiel 2**

Es wurde Beispiel 1 aus EP 0 144 948 nachgearbeitet. Die Monofolie hat eine Gesamtdicke von 75 µm und wurde mit 100 Gew.-% der Komponente II beschichtet. Die Folie zeigt keine gute Metallhaftung.

**Tabelle 2**

| Beispiel Nr. | Mischungsverhältnis K I:K II der Haftvermittlerschicht | Foliendicke [µm] | Deckschichtdicke A/C [µm] | Folienaufbau | Metallhaftung [N/25 mm] | Metallhaftung nach Sterilisation [N/25 mm] |
|---|---|---|---|---|---|---|
| 1 | 50:50 | 12 | 1,5/1,5 | ABC | 3,0 | 2,9 |
| 2 | 60:40 | 12 | 1,5/1,5 | ABC | 3,3 | 3,3 |
| 3 | 40:60 | 12 | 1,5/1,5 | ABC | 2,7 | 2,5 |
| VB 1 | 100:0 | 75 | -/- | B | 3,5 | 5,0 |
| VB 2 | 0:100 | 75 | -/- | B | 3,0 | 3,0 |

## Patentansprüche

1. Heißsterilisierbare, biaxial orientierte Polyesterfolie mit guter Metallhaftung mit einer Basisschicht B, die mindestens 80 Gew.-% thermoplastischen Polyester enthält, und mindestens einer Haftvermittlerschicht, die eine Mischung oder ein Blend aus zwei Komponenten I und II enthält, **dadurch gekennzeichnet, dass** die Komponente

I der Mischung oder des Blends ein Polyethylenterephthalat-Copolymer enthält, das aus dem Kondensationsprodukt der folgenden Monomeren bzw. deren zur Bildung von Polyestern befähigten Derivaten besteht:

A) 65 bis 95 Mol-% Isophthalsäure;
B) 0 bis 30 Mol-% wenigstens einer aliphatische Dicarbonsäure mit der Formel $HOOC(CH_2)_nCOOH$, wobei n im Bereich von 1 bis 11 liegt;
C) 5 bis 15 Mol-% wenigstens eines Sulfomonomeren enthaltend eine Alkalimetall-sulfonatgruppe an dem aromatischen Teil einer Dicarbonsäure;
D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen; wobei die Prozentangaben jeweils bezogen sind auf die Gesamtmenge der die Polyesterbeschichtung bildenden Monomeren;

und dass die Komponente II der Mischung oder des Blends Acrylcopolymere aus mindestens 50 Gew.-% eines oder mehrerer polymerisierter acrylischer und/oder methacrylischer Monomerer und 1 bis 15 Gew.-% eines copolymerisierbaren Comonomeren enthält, das in copolymerisiertem Zustand unter Einwirkung von erhöhter Temperatur zur Ausbildung von intermolekularen Vernetzungen befähigt ist.

**2.** Heißsterilisierbare Polyesterfolie nach Anspruch 1, **dadurch gekennzeichnet, dass** das Gewichtsverhältnis der Komponenten I und II im Bereich von I:II = 5:95 bis I:II = 95:5 liegt, vorzugsweise von I:II = 10:90 bis I:II = 90:10, insbesondere von I:II =15:85 bis I:II =85:15.

**3.** Heißsterilisierbare Polyesterfolie nach Anspruch 1 oder 2, **dadurch gekennzeichnet, dass** sie einen dreischichtigen Aufbau besitzt und neben der Basisschicht B je eine zusätzliche Deckschicht A und C auf beiden Seiten der Basisschicht B umfasst.

**4.** Heißsterilisierbare Polyesterfolie nach einem oder mehreren der Ansprüche 1 bis 3, **dadurch gekennzeichnet, dass** ihre Gesamtdicke im Bereich von 4 bis 300 µm liegt, insbesondere von 5 bis 250 µm, vorzugsweise von 6 bis 200 um, wobei die Basisschicht B einen Anteil von vorzugsweise 40 bis 95 % an der Gesamtdicke hat.

**5.** Heißsterilisierbare Polyesterfolie nach einem oder mehreren der Ansprüche 1 bis 4, **dadurch gekennzeichnet, dass** die Haftvermittlerschicht eine Dicke im Bereich von 5 bis 2000 nm aufweist, bevorzugt von 10 bis 500 nm, insbesondere von 20 bis 200 nm, und dass sie als verdünnte Lösung, Suspension oder Dispersion, vorzugsweise als wässrige Lösung, wässrige Suspension oder wässrige Dispersion, auf eine oder beide Folienoberflächen aufgebracht wird.

**6.** Heißsterilisierbare Polyesterfolie nach einem oder mehreren der Ansprüche 1 bis 5, **dadurch gekennzeichnet, dass** sie auf mindestens einer Oberfläche metallisiert oder mit $SiO_x$ oder $Al_xO_y$ beschichtet ist.

**7.** Verfahren zur Herstellung der Folie nach einem oder mehreren der Ansprüche 1 bis 6, durch Koextrusion und nachfolgende biaxiale Orientierung und Hitzefixierung, wobei zunächst das Polymere bzw. die Polymermischungen für die einzelnen Schichten, die Basisschicht B und die Deckschichten A und C, in Extrudern komprimiert und verflüssigt werden, wobei die gegebenenfalls als Zusätze vorgesehenen Additive bereits im Polymer bzw. in der Polymermischung enthalten sein können, wobei dann die Schmelzen gleichzeitig durch eine Flachdüse gepresst werden, und die ausgepresste mehrschichtige Schmelze auf einer oder mehreren innengekühlten Abzugswalzen abgezogen wird, wobei die Schmelze abkühlt und sich zu einer Vorfolie verfestigt und die Vorfolie dann zuerst in Längsrichtung und anschließend in Querrichtung gestreckt wird, **dadurch gekennzeichnet, dass** die Längsstrekkung bei einer Temperatur im Bereich von 80 bis 130 °C und die Querstreckung im Bereich von 90 bis 150 °C durchgeführt wird und dass das as Längsstreckverhältnis im Bereich von 2,5:1 bis 6:1, bevorzugt von 3:1 bis 5,5:1, und das Querstreckverhältnis im Bereich von 3,0:1 bis 5,0:1, bevorzugt von 3,5:1 bis 4,5:1, eingestellt werden.

**8.** Verfahren nach Anspruch 7, **dadurch gekennzeichnet, dass** nach dem Längsstrecken und vor der Querstreckung eine oder beide Oberfläche(n) der Folie mit der Zusammensetzung für die Haftvermittlerschicht in-line beschichtet wird/werden.

**9.** Verfahren nach Anspruch 7 oder 8, **dadurch gekennzeichnet, dass** die Folie zur Thermofixierung über eine Zeitdauer im Bereich von 0,1 bis 10 s bei einer Temperatur im Bereich von 150 bis 250 °C gehalten und anschließend aufgewickelt wird.

**10.** Verfahren nach einem oder mehreren der Ansprüche 7 bis 9, **dadurch gekennzeichnet, dass** Verschnittmaterial, das während der Folienherstellung anfällt, als Regenerat zu einem Anteil von bis zu 60 Gew.-%, bevorzugt von 10 bis 50 Gew.-%, bezogen auf das Gesamtgewicht der Folie, wieder für die Folienherstellung verwendet wird.

**11.** Verwendung einer heißsterilisierbaren Polyesterfolie nach einem oder mehreren der Ansprüche 1 bis 6 zur Verpackung von feuchtigkeits- und/oder luftempfindlichen Nahrungs- und Genussmitteln, speziell zur Herstellung so genannter "bag-in-box"-Verpackungen für die Verpackung flüssiger oder gießbarer Produkte.

**12.** Verwendung einer heißsterilisierbaren Polyesterfolie nach einem oder mehreren der Ansprüche 1 bis 6 als metallisierbare, dampfsterilisierbare Folie.